# EUROPÄISCHE PATENTSCHRIFT

(11) **EP 3 170 787 B1**
(45) Veröffentlichungstag und Bekanntmachung des Hinweises auf die Patenterteilung: **17.10.2018**
(21) Anmeldenummer: 16195298.1
(22) Anmeldetag: 24.10.2016
(51) Int. Cl.: B66F 9/075, B62B 5/00, G05D 1/02, G05D 1/00, G01S 3/808, G01S 15/42, H04B 1/3827, B62B 3/06, G08C 17/02, H04Q 9/00

(54) **VERFAHREN ZUR STEUERUNG EINES FLURFÖRDERZEUGS, SENSOREINRICHTUNG ZUR DURCHFÜHRUNG DIESES VERFAHRENS, UND SYSTEM AUS DIESER SENSOREINRICHTUNG UND EINEM FLURFÖRDERZEUG**
CONTROL METHOD FOR AN INDUSTRIAL TRUCK, SENSOR DEVICE TO PERFORM THIS METHOD, AND SYSTEM FORMED BY SAID SENSOR DEVICE AND AN INDUSTRIAL TRUCK
PROCÉDÉ DE COMMANDE D'UN CHARIOT DE MANUTENTION, DISPOSITIF DE DÉTECTION POUR EFFECTUER CE PROCÉDÉ ET SYSTÈME CONSTITUÉ DE CE DISPOSITIF DE DÉTECTION ET D'UN CHARIOT DE MANUTENTION

(30) Priorität: 18.11.2015 DE 102015119958
(43) Veröffentlichungstag der Anmeldung: 24.05.2017
(73) Patentinhaber: Linde Material Handling GmbH, 63743 Aschaffenburg (DE)
(72) Erfinder: Bodin, Lucien, 86530 Naintre (FR)
(74) Vertreter: Patentship Patentanwaltsgesellschaft mbH

(56) Entgegenhaltungen:
- EP-A1- 2 533 119
- EP-A2- 2 381 697

## Beschreibung

Die Erfindung betrifft ein Verfahren zur Steuerung eines Flurförderzeugs. Insbesondere betrifft die Erfindung ein Verfahren zur Steuerung eines Flurförderzeugs mit einer Empfangseinrichtung für ein drahtloses Signal, das durch eine von einer Person getragene Sensoreinrichtung ausgesandt wird, wobei die Empfangseinrichtung mit einer Steuerungsvorrichtung verbunden ist. Weiterhin betrifft die Erfindung eine Sensoreinrichtung sowie ein System bestehend aus einem Flurförderzeug und einer Sensoreinrichtung.

Zum Kommissionieren, dem Zusammenstellen von Warenlieferungen in einem Warenlager, werden Flurförderzeuge, insbesondere Lagertechnikgeräte in Form von Gabelhubwagen eingesetzt. Dabei wird das Flurförderzeug mit einem Ladungsträger, etwa einer Palette oder einem Drahtgitterkorb, durch die Regalgassen eines Warenlagers bewegt, in denen die zu kommissionierenden bzw. aufzunehmenden Waren gelagert sind. Die das Flurförderzeug bedienende Person, auch bezeichnet als Kommissionierer, entnimmt je nach Auftrag die im Regal befindlichen Waren, legt diese auf bzw. in den Ladungsträger und fährt das Flurförderzeug von einem Aufnahmeort zum nächsten innerhalb des Warenlagers. Die Fahrstrecken zwischen den Aufnahmeorten sind dabei in der großen Mehrzahl kurze bis sehr kurze gerade Strecken, beispielsweise entlang eines Regals in dem Warenlager. In der Summe entsteht jedoch durch die Vielzahl der erforderlichen oftmals sehr kurzen Fahrbewegungen des Flurförderzeugs, die von dem Kommissionierer vorgenommen werden müssen, ein erheblicher Zeitbedarf, da der Kommissionierer zu beispielsweise einer Steuerdeichsel des Gabelhubwagens gehen muss, um die entsprechenden Fahrschalter zu betätigen und den Gabelhubwagen bei der Fahrbewegung zu steuern, und im Anschluss wieder zurück an die Position zum Aufnehmen der Waren.

Es ist daher bekannt, das Flurförderzeug teilautomatisiert mit dem Kommissionierer zu bewegen, während die Waren entlang eines Regals aufgenommen werden. Die Steuerung des Flurförderzeugs bei der Fahrt zur nächsten Aufnahmestation kann dabei etwa durch eine Funkfernsteuerung erfolgen.

Nachteilig an diesem Stand der Technik ist, dass bei herkömmlichen Fernbedienungen mit Knöpfen, insbesondere Druckknöpfen, und Schaltern diese Fernbedienungen im Allgemeinen zu sperrig sind oder nur schwierig eingesetzt werden können. Die Fernbedienung muss leicht erreichbar und handhabbar sein für den Kommissionierer, während dieser gleichzeitig in der Lage sein muss, Schachteln und Pakete mit seinen Händen zu handhaben, ohne dass es zu unerwünschten Interaktionen mit der Fernbedienung kommt. Bei einem eigenen Gerät mit Knöpfen und Schaltern, das beispielsweise in einer Hand gehalten wird, während zugleich eine Ware in einer Verpackung mit den Händen aufgenommen wird, kann es zu unerwünschten Betätigungen der Schalter und Knöpfe kommen.

Bekannt sind weiterhin Funkfernbedingungen, die in einen Handschuh integriert sind, beispielsweise aus der EP 2 533 119 A1. Durch eine solche in einen Handschuh integrierte Funkfernbedienung hat der Kommissionierer grundsätzlich die Hände frei.

Nachteilig an diesem Stand der Technik ist jedoch, dass es zu Schwierigkeiten bei der Handhabung von Verpackungen kommen kann mit dem Risiko, dass es zu einer ungewollten Betätigung von Schaltern und Druckknöpfen der Fernbedienung des Handschuhs mit der Folge von unerwünschten Fahrbewegungen des Flurförderzeugs kommt.

Aus der EP 2 381 697 A2 ist eine Fernbedienung für eine als Bagger ausgebildete Arbeitsmaschine bekannt, die von einem Bediener an einem Arm getragen wird und Sensoren für die Erfassung eines Fingerbeugewinkels, eines Unterarmbeugewinkels, eines Unterarmdrehwinkels und eines Oberarmbeugewinkels aufweist, um den Ausleger und das am Ausleger angeordnete Werkzeug des Baggers zu steuern. Die Sensoren sind als Neigungssensoren, Lagesensoren bzw. Drehencoder ausgebildet.

Der vorliegenden Erfindung liegt die Aufgabe zugrunde, ein Verfahren zur Steuerung eines Flurförderzeugs, insbesondere beim Kommissionieren, zur Verfügung zu stellen, das die zuvor genannten Nachteile vermeidet und mit dem das Flurförderzeug auf einfache Art und Weise mit einer Person zusammen beim Aufladen von Waren bewegt und gesteuert werden kann.

Diese Aufgabe wird durch ein Verfahren zur Steuerung eines Flurförderzeugs mit den Merkmalen des unabhängigen Patentanspruchs 1, eine Sensoreinrichtung nach Anspruch 8 sowie ein System nach Anspruch 11 gelöst. Vorteilhafte Weiterbildungen der Erfindung sind in den Unteransprüchen angegeben.

Die Aufgabe wird erfindungsgemäß dadurch gelöst, dass bei einem Verfahren zur Steuerung eines Flurförderzeugs mit einer Empfangseinrichtung für ein drahtloses Signal, das durch eine von einer Person getragene Sensoreinrichtung ausgesandt wird, wobei die Empfangseinrichtung mit einer Steuerungsvorrichtung verbunden ist, die Sensoreinrichtung Messsensoren zur Erfassung elektrischer Muskelaktivität umfasst und durch eine Steuervorrichtung der Sensoreinrichtung die Haltung von Körperteilen und/oder Bewegungsabfolge von Körperteilen als Steuerungsgesten erfasst werden, die Steuerungsgesten als Parameter an die Empfangseinrichtung als drahtloses Signal übertragen werden und die Steuerungsvorrichtung des Flurförderzeugs entsprechend der Steuerungsgeste einen Steuerungsbefehl zur Steuerung des Flurförderzeugs erzeugt.

Durch die sogenannte Elektromyographie können Bewegungen und Muskelkontraktionen von Körperteilen der das Flurförderzeug bedienenden Person erkannt werden. Beispielsweise können dies Bewegungen eines Arms oder Unterarms sein. Wenn etwa Bewegungen des ganzen Arms, der Hand, der Faust oder auch nur einzelner Finger durchgeführt werden, können Oberflächenelektroden am Unterarm Potentialänderungen erfassen, die durch das Aktionspotential eines oder mehrerer Muskeln entstehen. Diese elektrische Muskelaktivität kann analysiert werden. Wiederum am Beispiel eines Unterarms können dadurch die Positionen der Hand, der Faust und Finger sowie des Unterarms selbst zueinander bestimmt werden. Insbesondere wenn noch zusätzliche Beschleunigungs- und Rotationssensoren bzw. Gyroskope an der Sensoreinrichtung vorhanden sind, können auch Bewegungen und die Anordnung des Unterarms im Raum bestimmt werden. Beispielsweise kann aus einem Schwerkraftsensor sowie durch die Muskelpotenziale erkannt werden, wenn ein Unterarm mit geballter Faust waagerecht gehalten wird. Wenn nun ein einzelner Finger, beispielsweise der Zeigefinger, ausgestreckt wird, so wird dies durch die Methoden der Elektromyographie, im konkreten Beispiel durch Oberflächenelektroden zur Erfassung der Aktionspotentiale der entsprechenden Streck- und Beugemuskeln erkannt. Das Ausstrecken des Zeigefingers aus einem waagrecht gehaltenen Unterarm mit geballter Faust stellt dann ein Beispiel für eine Steuerungsgeste dar, die etwa dem Befehl zugeordnet werden kann, dass das Flurförderzeug vorwärts fahren soll.

Dabei kann die Steuervorrichtung der Sensoreinrichtung die Steuerungsgeste erfassen und bereits in einen Parameterwert umsetzen, der direkt einem Fahrbefehl entspricht. Alternativ ist es jedoch auch möglich, dass die Sensorwerte der verschiedenen Sensoren der Sensoreinrichtung als Parameterwerte übertragen werden und die Steuerungsvorrichtung des Flurförderzeugs selbst erst die Berechnung und Bestimmung der Steuerungsgeste sowie die Umsetzung in den sich daraus ergebenden Steuerungsbefehl vornimmt. Wenn die Sensoreinrichtung bereits einen Fahrbefehl überträgt, muss vorteilhaft das Flurförderzeug nicht mit einer speziellen Software versehen werden. Vielmehr kann sogar, soweit ein geeignetes Protokoll zur Verfügung steht, im Rahmen einer Nachrüstlösung das Flurförderzeug hier angesteuert werden, wenn bereits eine Funktion zur Steuerung über eine Fernbedienung zur Verfügung steht. Umgekehrt steht auf einem Flurförderzeug im Regelfall in einer Steuerungsvorrichtung, beispielsweise einer Fahrzeugsteuerung, eine erheblich größere Rechenleistung zur Verfügung als sie etwa in einem tragbaren Armband untergebracht werden kann. Vorteilhaft kann der Kommissionierer das Flurförderzeug, beispielsweise einen Gabelhubwagen, ohne jegliche Schalter, Knöpfe, Auswahlfunktionen oder Druckknöpfe allein durch natürliche Steuerungsgesten, die intuitiv und leicht zu merken sind, ansteuern. Dabei können über die im Stand der Technik hinaus bekannte Funktion eines automatischen Folgen des Flurförderzeugs, beispielsweise durch Ansteuerung über eine Fernsteuerung, auch weitere Funktionen angesteuert werden, wie etwa ein Hubfunktion oder eine automatische Hubhöhenvorwahl. Weiterhin vorteilhaft kann der Kommissionierer seine Arbeit durchführen ohne Unterbrechung oder die Notwendigkeit, zu einer Fernbedienung zu greifen und diese zu bedienen. Der Kommissionierer kann auch alle normalen Handlungen und Kommissionierarbeiten freihändig und ohne das Risiko ungewollter Aktionen des Flurförderzeugs aufgrund einer unabsichtlichen Betätigung einer Fernbedienung durchführen.

Die Messsensoren zur Erfassung elektrischer Muskelaktivität können Oberflächenelektroden sein.

In einer Weiterbildung des Verfahrens umfasst die Sensoreinrichtung Beschleunigungssensoren und/oder Gyroskope.

Durch solche weiteren Sensoren kann eine Bewegungsabfolge und Position im Raum eines ganzen Körperteils, insbesondere beispielsweise eines Unterarms, als Steuerungsgeste besser erfasst werden, als wenn nur Muskelkontraktionen oder Muskelentspannungen erkannt werden können. Dabei werden durch Gyroskope Drehbewegungen erfasst. Zusätzlich können auch Schwerkraftsensoren vorgesehen sein, die die Richtung der Erdbeschleunigung und damit beispielsweise eine vertikale Anordnung eines Unterarms oder eine horizontale Anordnung erkennen können. Es ist auch möglich, dass Gyroskope zugleich als Schwerkraftsensor ausgelegt sein können. Weitere denkbare Sensoren sind Magnetometer.

Die Sensoreinrichtung kann ein am Unterarm zu tragendes Armband sein.

Grundsätzlich ist es auch denkbar die Bewegungen anderer Körperteile zu erfassen. Beispielsweise können Jacken oder Arbeitswesten mit Elektromyographie-Sensoren, Gyroskopen oder Beschleunigungsmessern versehen werden. Besonders praktisch und leicht anzulegen ist jedoch ein Armband, das am Unterarm getragen wird. Dieses stört auch verhältnismäßig wenig bei der eigentlichen Kommissionierarbeit. Zugleich können mit dem Unterarm oder dem gesamten Arm sehr viele Steuerungsgesten erzeugt werden.

Vorteilhaft umfassen die Steuerungsgesten Haltungen und Bewegungen der Hand sowie des Unterarms.

Mit Bewegungen des Unterarms und der Hand können sehr viele eindeutige Steuerungsgesten erzeugt werden. Beispielsweise kann ein waagerecht nach vorne gehaltener Unterarm mit geballter Faust, bei dem ein Zeigefinger ausgestreckt wird, einen Vorwärtsfahrbefehl für das Flurförderzeug bedeuten. Wenn bei dem waagrecht gehaltenen Unterarm mit geballter Faust der Daumen angehoben wird, kann dies einen Hubbefehl für eine Lastgabel bedeuten. Wenn von dieser Grundhaltung aus der Daumen abgesenkt wird, kann dies einen Befehl zum Absenken einer Lastgabel bedeuten. Bei einem angehobenen, senkrecht nach oben gehaltenen Unterarm kann das Zusammenballen einer ausgestreckten Hand zu einer Faust einen Stoppbefehl für das Flurförderzeug bedeuten. Wenn bei einem waagrecht ausgestreckten Unterarm mit flach nach vorne gehaltener Hand, diese Hand nach rechts um 90° verdreht wird, kann dies einen Lenkbefehl nach rechts bedeuten. Entsprechend kann eine Verdrehung nach links um 90°, sodass der Daumen bei ausgestreckter Fingern der Hand nach unten zeigt, einen Lenkbefehl nach links bedeuten.

Die Steuerungsgesten können auch Haltungen und Bewegungen des ganzen Arms umfassen.

Für weitere Steuerungsgesten können auch Bewegungen des ganzen Arms berücksichtigt werden. Beispielsweise kann das Abwinkeln eines Ellenbogens eines mit ausgestreckten Fingern waagerecht gehaltenen Arms um 90° senkrecht nach oben als Steuerungsgeste für das Anfahren einer vorbestimmten Hubhöhe genutzt werden. Das ausgestreckte, senkrechte nach oben Halten des gesamten Arms kann als Steuerungsbefehl für ein Warnsignal, insbesondere beispielsweise ein Hupensignal, genutzt werden.

Durch Parameter, die Steuerungsgesten entsprechen, können eine Vorwärtsfahrt des Flurförderzeugs und/oder ein Anheben einer Lastgabel und/oder ein Absenken einer Lastgabel und/oder ein Stoppen des Flurförderzeugs und/oder ein Lenken des Flurförderzeugs nach rechts und/oder ein Lenken des Flurförderzeugs nach links und/oder ein Anheben einer Lastgabel auf eine vorbestimmte Höhe und/oder ein Warnsignal angesteuert werden.

Hierfür können beispielsweise die bereits oben und zuvor jeweils zu solchen Bewegungen des Flurförderzeugs geschilderten Steuerungsgesten eingesetzt werden. Grundsätzlich ist jedoch aber auch jede andere Zuordnung von Steuerungsgesten denkbar.

Die Aufgabe wird auch gelöst durch eine Sensoreinrichtung, die von einer Person getragen werden kann, mit Messsensoren zur Erfassung elektrischer Muskelaktivität, insbesondere Elektromyographie-Sensoren, und mit einer Steuervorrichtung, die die Haltung von Körperteilen und/oder Bewegungsabfolge von Körperteilen als Steuerungsgesten erfasst sowie die Steuerungsgesten als Parameter als drahtloses Signal überträgt, wobei die Steuervorrichtung zur Durchführung eines Verfahrens dient, wie es zuvor beschrieben wurde.

Die Sensoreinrichtung kann Beschleunigungssensoren und/oder Gyroskope umfassen.

Vorteilhaft ist die Sensoreinrichtung ein am Unterarm zu tragendes Armband.

Die Aufgabe wird auch gelöst durch ein System aus einer Sensoreinrichtung, wie sie zuvor beschrieben wurde, und einem Flurförderzeug mit einer Empfangseinrichtung für ein drahtloses Signal der Sensoreinrichtung, wobei die Empfangseinrichtung mit einer Steuerungsvorrichtung verbunden ist und die Steuervorrichtung der Sensoreinrichtung sowie die Steuerungsvorrichtung des Flurförderzeugs ein Verfahren durchführen, wie es zuvor beschrieben wurde.

Das System weist die bereits genannten Vorteile auf.

Das Flurförderzeug kann dabei speziell für das System ausgelegt sein, beispielsweise indem in einer Software in einem Fahrzeug-Steuerungscomputer bzw. der Steuerungsvorrichtung des Flurförderzeugs die Auswertung der Sensorwerte der Sensoreinrichtung und die Bestimmung der Steuerungsgesten sowie der sich daraus ergebenden Steuerbefehle bzw. Fahr- oder Funktionsbefehle des Flurförderzeugs erfolgt. Es ist jedoch auch möglich, ein Flurförderzeug ohne spezielle Auslegung für das System einzusetzen, das beispielsweise durch eine Fernbedienung mit einem entsprechenden Protokoll gesteuert werden kann. Hier ersetzt die Sensoreinrichtung die Fernbedienung und übermittelt als Parameterwerte die Steuerbefehle der Fernbedienung. Dadurch ist eine leichte Nachrüstung möglich.

Weitere Vorteile und Einzelheiten der Erfindung werden anhand der in den schematischen Figuren dargestellten Ausführungsbeispiele näher erläutert. Hierbei zeigt
- Fig. 1: eine tragbare Sensoreinheit an einem Unterarm,
- Fig. 2: schematisch eine Steuerungsgeste für eine Vorwärtsbewegung,
- Fig. 3: schematisch eine Steuerungsgeste für eine Hubbewegung einer Lastgabel,
- Fig. 4: schematisch eine Steuerungsgeste für ein Absenken einer Lastgabel,
- Fig. 5: schematisch eine Steuerungsgeste für ein Stoppen eines Flurförderzeugs,
- Fig. 6: schematisch eine Steuerungsgeste für ein Steuern nach rechts,
- Fig. 7: schematisch eine Steuerungsgeste für eine Hubbewegung auf eine vorgewählte Hubhöhe,
- Fig. 8: schematisch eine Steuerungsgeste für ein Warnsignal und
- Fig. 9: schematisch das erfindungsgemäße System.

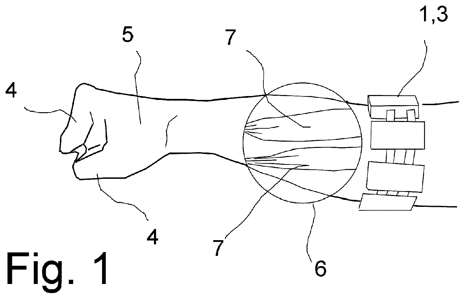

Die Fig. 1 zeigt eine tragbare Sensoreinrichtung 1 an einem Unterarm 2. Die Sensoreinrichtung 1 besteht aus einem Armband 3, das mehrere Elektromyographie-Sensoren in Form von Oberflächenelektroden aufweist, die über den Umfang des Armbands 3 verteilt auf der Haut aufliegen. Durch die Oberflächenelektroden wird das elektrische Aktionspotential der im Unterarm 2 angeordneten Beuge- und Streckmuskeln von Fingern 4 bzw. einer Hand 5 erfasst. In dem Kreisausschnitt 6 sind solche Beuge- und Streckmuskeln 7 sichtbar dargestellt. Das Armband 3 kann als weitere, hier nicht im Detail dargestellte Sensoren Gyroskope zur Erfassung von Drehbewegungen, Beschleunigungssensoren und einen Schwerkraftsensor enthalten, um Bewegungen sowie die absolute Lage des Unterarms 2 im Raum bestimmen zu können. Die Sensoreinrichtung 1 weist eine Steuervorrichtung zur Erfassung von Steuerungsgesten und Bestimmung von Parametern auf, die als drahtloses Signal durch eine ebenfalls nicht dargestellte Antenne bzw. Sendeeinrichtung übertragen werden.

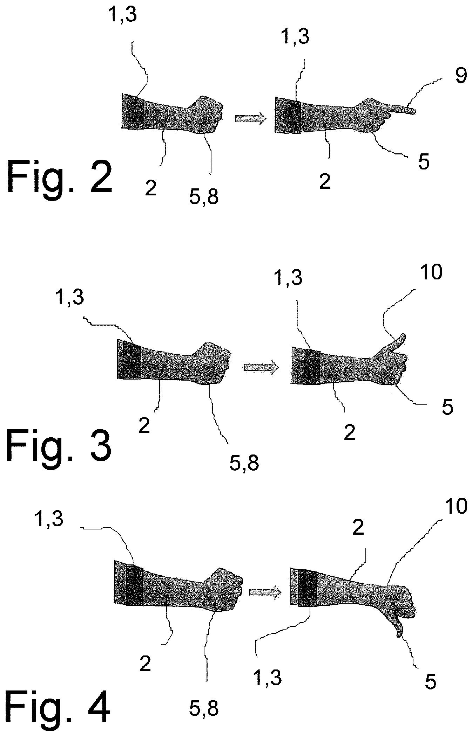

Die Fig. 2 zeigt schematisch eine Steuerungsgeste für eine Vorwärtsfahrbewegung des Flurförderzeugs. Bei dem waagerecht nach vorne gehaltenen Unterarm 2 mit der zu einer Faust 8 geballten Hand 5 wird ein Zeigefinger 9 ausgestreckt, wie durch den Pfeil mit der Folgedarstellung daneben verdeutlicht. Dies entspricht einem Vorwärtsfahrbefehl für das Flurförderzeug. Die Steuervorrichtung der Sensoreinrichtung 1 in dem Armband 3 erzeugt einen entsprechenden Parameterwert.

Die Fig. 3 zeigt schematisch eine Steuerungsgeste für eine Hubbewegung einer Lastgabel. Bei dem waagerecht nach vorne gehaltenen Unterarm 2 mit der zu einer Faust 8 geballten Hand 5 wird ein Daumen 10 angehoben. Dies entspricht einem Hubbefehl für eine Lastgabel. Die Steuervorrichtung der Sensoreinrichtung 1 in dem Armband 3 erzeugt einen entsprechenden Parameterwert.

Die Fig. 4 zeigt schematisch eine Steuerungsgeste für ein Absenken einer Lastgabel. Bei dem waagerecht nach vorne gehaltenen Unterarm 2 mit der zu einer Faust 8 geballten Hand 5 wird der Daumen 10 abgesenkt. Dies entspricht einem Befehl zum Absenken der Lastgabel. Die Steuervorrichtung der Sensoreinrichtung 1 in dem Armband 3 erzeugt einen entsprechenden Parameterwert.

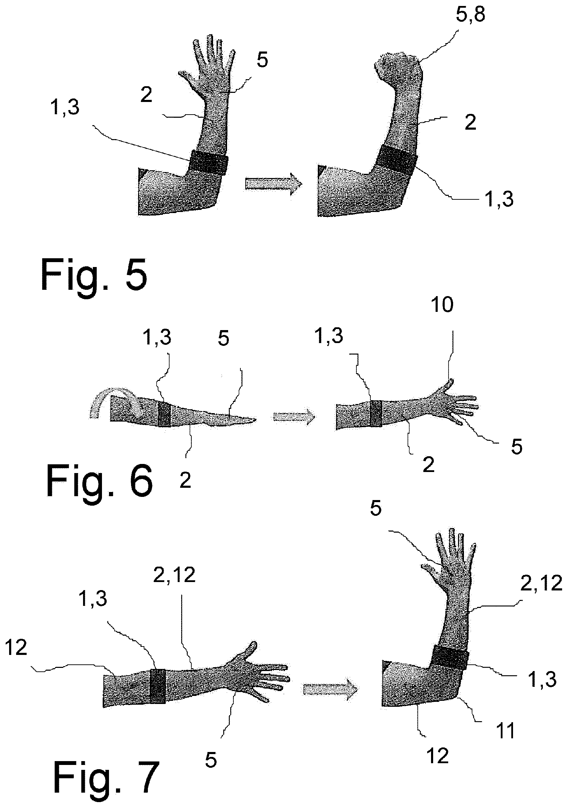

Die Fig. 5 zeigt schematisch eine Steuerungsgeste für ein Stoppen eines Flurförderzeugs. Bei einem angehobenen, senkrecht nach oben gehaltenen Unterarm 2 wird die ausgestreckte Hand 5 zu der Faust 8 geballt. Dies entspricht einem Stoppbefehl für das Flurförderzeug, der als Parameterwert von der Steuervorrichtung der Sensoreinrichtung 1 in dem Armband 3 erzeugt wird.

Die Fig. 6 zeigt schematisch eine Steuerungsgeste für ein Steuern nach rechts. Bei einem waagrecht ausgestreckten Unterarm 2 mit flach nach vorne gehaltener Hand 5 wird diese Hand 5 nach rechts um 90° verdreht, sodass der Daumen 10 senkrecht nach oben zeigt. Von der Sensoreinrichtung 1 in dem Armband 3 wird dann ein Parameterwert an das Flurförderzeug übertragen, der zu einem Drehen der Lenkung nach rechts führt, solange diese Steuerungsgeste beibehalten wird. Es ist auch ganz grundsätzlich und unabhängig von dem hier geschilderten Beispiel denkbar, dass Steuerungsgesten kombiniert werden und beispielsweise zusätzlich zu einer Drehung der Lenkung durch das Ausstrecken des Zeigefingers 9, wie in der Fig. 1 dargestellt, eine gleichzeitige Vorwärtsfahrt bewirkt wird.

Die Fig. 7 zeigt schematisch eine Steuerungsgeste für eine Hubbewegung auf eine vorgewählte Hubhöhe. Das Abwinkeln des Unterarms 2 in dem Ellenbogengelenk 11 eines mit ausgestreckter Hand 5 und ausgestreckten Fingern waagerecht gehaltenen Arms 12 um 90° senkrecht nach oben dient als Steuerungsgeste für das Anfahren einer vorbestimmten Hubhöhe. Die Steuervorrichtung der Sensoreinrichtung 1 in dem Armband 3 erzeugt einen entsprechenden Parameterwert.

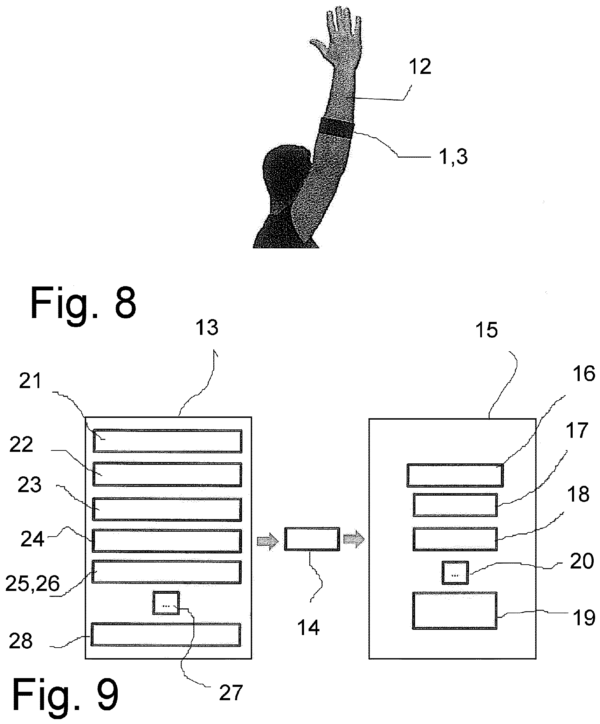

Die Fig. 8 zeigt schematisch eine Steuerungsgeste für ein Warnsignal. Das ausgestreckte, senkrechte nach oben Halten des gesamten Arms 12 dient als Steuerungsbefehl für ein Warnsignal, insbesondere beispielsweise ein Hupensignal, und die Steuervorrichtung der Sensoreinrichtung 1 in dem Armband 3 erzeugt einen entsprechenden Parameterwert.

Die Fig. 9 zeigt schematisch das erfindungsgemäße System. Auf der linken Seite sind Sensoren 13 zusammengefasst, basierend auf deren Messwerten bzw. den erzeugten Parameterwerten die Steuerungsvorrichtung 14 das Flurförderzeug 15 ansteuert. Dabei werden in dem Flurförderzeug 15 Magnetventile 16, eine Lenkung 17, ein Fahrantriebsmotor 18, eine Hydraulikpumpe 19 und weitere Funktionen 20 angesteuert.

Die Sensoren umfassen Bewegungssensoren 21, Magnetometer 22, Gyroskope 23, Beschleunigungssensoren 24 und insbesondere Elektromyographie-Sensoren 25, wie etwa Oberflächenelektroden 26. Daneben sind noch weitere Sensoren 27 und beispielsweise eine 3D-Kamera 28 für weitere, zusätzliche Aufgaben vorgesehen.

## Patentansprüche

1. Verfahren zur Steuerung eines Flurförderzeugs mit einer Empfangseinrichtung für ein drahtloses Signal, das durch eine von einer Person getragene Sensoreinrichtung (1) ausgesandt wird, wobei die Empfangseinrichtung mit einer Steuerungsvorrichtung (14) verbunden ist,
**dadurch gekennzeichnet,**
**dass** die Sensoreinrichtung (1) Messsensoren (25) zur Erfassung elektrischer Muskelaktivität umfasst und durch eine Steuervorrichtung der Sensoreinrichtung (1) die Haltung von Körperteilen und/oder Bewegungsabfolge von Körperteilen als Steuerungsgesten erfasst werden, die Steuerungsgesten als Parameter an die Empfangseinrichtung als drahtloses Signal übertragen werden und die Steuerungsvorrichtung (14) des Flurförderzeugs (15) entsprechend der Steuerungsgeste einen Steuerungsbefehl zur Steuerung des Flurförderzeugs (15) erzeugt.

2. Verfahren nach Anspruch 1,
**dadurch gekennzeichnet,**
**dass** die Messsensoren (25) zur Erfassung elektrischer Muskelaktivität Oberflächenelektroden (26) sind.

3. Verfahren nach Anspruch 1 oder 2,
**dadurch gekennzeichnet,**
**dass** die Sensoreinrichtung (1) Beschleunigungssensoren (24) und/oder Gyroskope (23) umfasst.

4. Verfahren nach einem der Ansprüche 1 bis 3,
**dadurch gekennzeichnet,**
**dass** die Sensoreinrichtung (1) ein am Unterarm zu tragendes Armband (3) ist.

5. Verfahren nach Anspruch 4,
**dadurch gekennzeichnet,**
**dass** die Steuerungsgesten Haltungen und Bewegungen der Hand (5) sowie des Unterarms (2) umfassen.

6. Verfahren nach Anspruch 5,
**dadurch gekennzeichnet,**
**dass** die Steuerungsgesten auch Haltungen und Bewegungen des ganzen Arms (12) umfassen.

7. Verfahren nach einem der Ansprüche 1 bis 6,
**dadurch gekennzeichnet,**
**dass** durch Steuerungsgesten entsprechende Parameter eine Vorwärtsfahrt des Flurförderzeugs (15) und/oder ein Anheben einer Lastgabel und/oder ein Absenken einer Lastgabel und/oder ein Stoppen des Flurförderzeugs (15) und/oder ein Lenken des Flurförderzeugs (15) nach rechts und/oder ein Lenken des Flurförderzeugs (15) nach links und/oder ein Anheben einer Lastgabel auf eine vorbestimmte Höhe und/oder ein Warnsignal angesteuert werden können.

8. Sensoreinrichtung, die von einer Person getragen werden kann, mit Messsensoren (25) zur Erfassung elektrischer Muskelaktivität, insbesondere Elektromyographie-Sensoren (25), und mit einer Steuervorrichtung, die die Haltung von Körperteilen und/oder Bewegungsabfolge von Körperteilen als Steuerungsgesten erfasst sowie die Steuerungsgesten als Parameter als drahtloses Signal überträgt, wobei die Sensoreinrichtung (1) zur Durchführung eines Verfahrens nach einem der vorhergehenden Ansprüche dient.

9. Sensoreinrichtung nach Anspruch 8,
**dadurch gekennzeichnet,**
**dass** die Sensoreinrichtung (1) Beschleunigungssensoren (24) und/oder Gyroskope (23) umfasst.

10. Sensoreinrichtung nach Anspruch 8 oder 9,
**dadurch gekennzeichnet,**
**dass** die Sensoreinrichtung (1) ein am Unterarm (2) zu tragendes Armband (3) ist.

11. System aus einer Sensoreinrichtung (1) nach einem der Ansprüche 8 bis 10 und einem Flurförderzeug (15) mit einer Empfangseinrichtung für ein drahtloses Signal der Sensoreinrichtung (1), wobei die Empfangseinrichtung mit einer Steuerungsvorrichtung (14) verbunden ist und die Steuervorrichtung der Sensoreinrichtung (1) sowie die Steuerungsvorrichtung (14) des Flurförderzeugs (15) ein Verfahren nach einem der Ansprüche 1 bis 7 durchführen.

## Claims

1. Method for controlling an industrial truck having a reception device for a wireless signal which is emitted by a sensor device (1) which is carried by a person, wherein the reception device is connected to a control apparatus (14),
**characterized**
**in that** the sensor device (1) comprises measuring sensors (25) for detecting electrical muscle activity, and the position of body parts and/or movement sequence of body parts are detected as control gestures by means of a control apparatus of the sensor device (1), the control gestures are transmitted as parameters to the reception device as a wireless signal, and the control apparatus (14) of the industrial truck (15) generates, in accordance with the control gesture, a control command for controlling the industrial truck (15).

2. Method according to Claim 1,
**characterized**
**in that** the measuring sensors (25) for detecting electrical muscle activity are surface electrodes (26) .

3. Method according to Claim 1 or 2,
**characterized**
**in that** the sensor device (1) comprises acceleration sensors (24) and/or gyroscopes (23).

4. Method according to one of Claims 1 to 3,
**characterized**
**in that** the sensor device (1) is an armband (3) to be worn on the forearm.

5. Method according to Claim 4,
**characterized**
**in that** the control gestures comprise positions and movements of the hand (5) and of the forearm (2).

6. Method according to Claim 5,
**characterized**
**in that** the control gestures also comprise positions and movements of the entire arm (12).

7. Method according to one of Claims 1 to 6,
**characterized**
**in that** by means of parameters corresponding to control gestures it is possible to actuate forward travel of the industrial truck (15) and/or raising of a load fork and/or lowering of a load fork and/or stopping of the industrial truck (15) and/or steering of the industrial truck (15) to the right and/or steering of the industrial truck (15) to the left and/or raising of a load fork to a predetermined height and/or a warning signal.

8. Sensor device which can be carried by a person, having measuring sensors (25) for detecting electrical muscle activity, in particular electromyography sensors (25), and having a control apparatus which detects the position of body parts and/or movement sequence of body parts as control gestures and transmits the control gestures as parameters as a wireless signal, wherein the sensor device (1) serves to carry out a method according to one of the preceding claims.

9. Sensor device according to Claim 8,
**characterized**
**in that** the sensor device (1) comprises acceleration sensors (24) and/or gyroscopes (23).

10. Sensor device according to Claim 8 or 9,
**characterized**
**in that** the sensor device (1) is an armband (3) to be worn on the forearm (2).

11. System composed of a sensor device (1) according to one of Claims 8 to 10 and an industrial truck (15) having a reception device for a wireless signal of the sensor device (1), wherein the reception device is connected to a control apparatus (14), and the control apparatus of the sensor device (1) and the control apparatus (14) of the industrial truck (15) carry out a method according to one of Claims 1 to 7.

## Revendications

1. Procédé pour commander un chariot de manutention comprenant un dispositif de réception pour un signal sans fil, lequel est émis par un dispositif capteur (1) porté par une personne, le dispositif de réception étant relié à un arrangement de commande (14),
**caractérisé en ce**
**que** le dispositif capteur (1) comporte des capteurs de mesure (25) destinés à détecter l'activité musculaire électrique et la posture de parties du corps et/ou une séquence de mouvements de parties du corps en tant que gestes de commande étant détectées par un arrangement de contrôle du dispositif capteur (1), les gestes de commande étant transmis en tant que paramètres au dispositif de réception sous la forme d'un signal sans fil et l'arrangement de commande (14) du chariot de manutention (15) générant une instruction de commande servant à commander le chariot de manutention (15) conformément au geste de commande.

2. Procédé selon la revendication 1, **caractérisé en ce que** les capteurs de mesure (25) destinés à détecter l'activité musculaire électrique sont des électrodes de surface (26).

3. Procédé selon la revendication 1 ou 2,
**caractérisé en ce que** le dispositif capteur (1) comporte des capteurs d'accélération (24) et/ou des gyroscopes (23).

4. Procédé selon l'une des revendications 1 à 3, **caractérisé en ce que** le dispositif capteur (1) est un brassard (3) à porter sur l'avant-bras.

5. Procédé selon la revendication 4, **caractérisé en ce que** les gestes de commande comprennent des postures et des mouvements de la main (5) ainsi que de l'avant-bras (2).

6. Procédé selon la revendication 5, **caractérisé en ce que** les gestes de commande comprennent également des postures et des mouvements de l'ensemble du bras (12) .

7. Procédé selon l'une des revendications 1 à 6, **caractérisé en ce que** au moyen de paramètres correspondants à des gestes une marche avant du chariot de manutention (15) et/ou un levage d'une fourche porte-charge et/ou un abaissement d'une fourche porte-charge et/ou un arrêt du chariot de manutention (15) et/ou un changement de direction du chariot de manutention (15) vers la droite et/ou un changement de direction du chariot de manutention (15) vers la gauche et/ou un levage d'une fourche porte-charge à une hauteur prédéfinie et/ou un signal d'alerte peuvent être commandés par.

8. Dispositif capteur qui peut être porté par une personne, comportant des capteurs de mesure (25) destinés à détecter l'activité musculaire électrique, notamment des capteurs d'électromyographie (25), et comprenant un arrangement de contrôle, qui détecte la posture de parties du corps et/ou une séquence de mouvements de parties du corps en tant que gestes de commande et transmet les gestes de commande en tant que paramètres sous la forme d'un signal sans fil, le dispositif capteur (1) servant à mettre en oeuvre un procédé selon l'une des revendications précédentes.

9. Dispositif capteur selon la revendication 8, **caractérisé en ce que** le dispositif capteur (1) comporte des capteurs d'accélération (24) et/ou des gyroscopes (23).

10. Dispositif capteur selon la revendication 8 ou 9, **caractérisé en ce que** le dispositif capteur (1) est un brassard (3) à porter sur l'avant-bras (2).

11. Système composé d'un dispositif capteur (1) selon l'une des revendications 8 à 10 et d'un chariot de manutention (15) comprenant un dispositif de réception pour un signal sans fil du dispositif capteur (1), le dispositif de réception étant relié à un arrangement de commande (14) et l'arrangement de contrôle du dispositif capteur (1) ainsi que l'arrangement de commande (14) du chariot de manutention (15) mettant en oeuvre un procédé selon l'une des revendications 1 à 7.
